# EUROPÄISCHE PATENTSCHRIFT

(11) **EP 2 280 609 B1**
(45) Veröffentlichungstag und Bekanntmachung des Hinweises auf die Patenterteilung: **08.08.2018**
(21) Anmeldenummer: 09757111.1
(22) Anmeldetag: 28.05.2009
(51) Int. Cl.: B26B 3/00, A22B 5/00, A22C 17/00

(54) **HANDWERKZEUG**
HAND TOOL
OUTIL À MAIN

(30) Priorität: 04.06.2008 DE 102008026678
(43) Veröffentlichungstag der Anmeldung: 09.02.2011
(73) Patentinhaber: ASTRA Gesellschaft für Asset Management mbH & Co. KG, 30890 Barsinghausen (DE)
(72) Erfinder: STOBBE, Anatoli, 30890 Barsinghausen (DE); MUSSMANN, Stefan, 30566 Hemmingen (DE)
(74) Vertreter: Patentanwälte Thömen & Körner
(86) Internationale Anmeldenummer: PCT/DE2009/000744
(87) Internationale Veröffentlichungsnummer: WO 2009/146677

(56) Entgegenhaltungen:
- WO-A-01/42991
- WO-A-2005/108183
- WO-A-2008/006342
- DE-A1-102006 012 070

## Beschreibung

Die Erfindung betrifft ein Handwerkzeug nach dem Oberbegriff des Anspruchs 1.

Handwerkzeuge im gewerblichen industriellen und medizinischen Bereich unterliegen Anforderungen wie Registrierung bei Aus- und Abgabe, Erfassung der Vollständigkeit, Erfassung der Einsatzzeit. So werden z. B. in fleischverarbeitenden Betrieben Entbeinungsmesser eingesetzt, die nach einer festgelegten Benutzungsdauer gereinigt werden müssen, damit eine Vermehrung und Weitergabe von Keimen verhindert wird.

Zur sicheren, genauen und schnellen Erfassung der Handwerkzeuge wäre die Nutzung von berührungslos lesbaren RFID-Chips an den Handwerkzeugen und deren Registrierung mittels Lesegeräten sinnvoll.

Um eine ausreichende Lesereichweite der RFID-Chips zu erhalten, ist eine mit dem Chip gekoppelte Antenne notwendig. Eine in einen Kunststoffgriff des Handwerkzeugs eingelassene Antenne würde wegen der Nachbarschaft zu metallischen Teilen stark gedämpft werden. Bei ausschließlich aus Metall bestehen Handwerkzeugen, z. B. medizinischen Instrumenten ist das Problem noch gravierender.

Aus der WO 01/42991 A1 ist ein System und ein Verfahren zur Erfassung von Nutzungsdaten eines Handwerkzeugs, nämlich eines Entbeinungsmessers bekannt. In einer Öffnung eines Erls des Entbeinungsmessers ist in Querrichtung ein Transponder befestigt. Dieser Transponder steht nach außen zu gleichen Teilen über die Oberfläche des Erls vor. Aus dem Datenblatt eines in der Veröffentlichung erwähnten geeigneten Transponder geht hervor, dass der Transponder ein Glasgehäuse umfasst, in dem neben einem RFID-Chip eine vollständige Antenne angeordnet ist. Diese Antenne befindet sich außerhalb der Öffnung des Erls des Entbeinungsmessers.

Der Erfindung liegt die Aufgabe zugrunde, ein Handwerkzeug derart mit einem RFID-Chip zu kombinieren, dass eine hohe Lesereichweite und damit eine sichere Identifizierung erzielt wird.

Diese Aufgabe wird durch ein Handwerkzeug nach Anspruch gelöst.

Weiterbildungen und vorteilhafte Ausgestaltungen ergeben sich aus den Unteransprüchen.

Bei der erfindungsgemäßen Lösung ist der metallische Teil des Handwerkzeugs selbst Antenne, mit der der RFID-Chip mittels seiner Koppelschleife in einer Öffnung mit einem nach außen geführten Schlitz im metallischen Teil gekoppelt ist. Wegen der induktiven Kopplung an der Öffnung ist an dieser Stelle das "kalte" Ende der Antenne gebildet. Kapazitive Einflüsse auf die Antenne durch die Hand eines Nutzers an dieser Stelle sind daher minimal.

Sofern das Handwerkzeug mit einem angespritzten Kunststoffhandgriff versehen wird, sind keine Änderungen am Werkzeug zum Spritzen des Kunststoffhandgriffs nötig. Außerdem ist der RFID-Chip mit der Koppelspule während des Spritzvorgangs keiner hohen Temperatur des flüssigen Kunststoffes ausgesetzt, da die Wärme durch den metallischen Teil abgeleitet werden kann.

Gemäß einer Weiterbildung ist der RFID-Chip mit der Koppelschleife in eine Vergussmasse eingebettet und in die Öffnung eingeklemmt.

Dadurch bleibt der RFID-Chip mit der Koppelschleife nach dem Einsetzen in die Öffnung definiert positioniert und ist bei nachfolgenden Herstellungsschritten gegen eine mögliche Verlagerung resistent. Zudem bildet die Vergussmasse eine Wärmeisolierung für den RFID-Chip und die Koppelschleife beim Anspritzen des Kunststoffgriffs und überbrückt damit die Zeit zwischen dem Anspritzen mit flüssigem Kunststoff und dessen Abkühlen.

Vorzugsweise umschließt der Kunststoffgriff die Öffnung und den in der Öffnung angeordneten RFID-Chip mit der Koppelschleife.

Dadurch ist der RFID-Chip mit der Koppelschleife beim fertigen Handwerkzeug zusätzlich durch den Kunststoffgriff geschützt und von außen unzugänglich. Er ist somit weder mechanischen Einflüssen bei der Handhabung des Handwerkzeugs ausgesetzt, noch chemischen Einflüssen bei der Reinigung.

Angaben über Art und Typs des Handwerkzeugs können im RFID-Chip codiert oder uncodiert durch Beschreiben gespeichert sein.

Dadurch kann das Handwerkzeug unabhängig von einer zentralen Historiespeicherung seine spezifischen Daten bei sich tragen, so dass diese von jedem beliebigen Lesegerät abgefragt werden können.

Ferner kann die Gebrauchsdauer erfasst werden.

Dadurch ist es möglich, gebrauchte Werkzeuge rechtzeitig aus dem Produktions- oder Nutzungsprozess zu entziehen, um Verunreinigungen oder Verschleiß zu vermeiden.

Bearbeitungs- und Wartungsvorgänge, wie Reinigen, Schärfen können erfasst und gespeichert werden.

Durch Erfassen der Historie von Bearbeitungs- und Wartungsvorgänge, wie Reinigen, Schärfen können sämtliche Vorgänge ausgewertet werden, die Aufschluss über Brauchbarkeit und Lebensdauer des Werkzeugs liefern.

Bei Überschreiten von Grenzwerten der Anzahl der Bearbeitungs- und Wartungsvorgänge kann der Nutzer gewarnt oder das Werkzeug aus dem Nutzungskreislauf entfernt werden.

Dadurch wir sichergestellt, dass ungeeignete Werkzeuge nicht mehr in den Produktions- oder Nutzungsprozess gelangen.

Über eine Identifizierung von Art und Typs des Handwerkzeugs kann ein Reinigungs- und/oder Schärfwerkzeug voreingestellt werden.

Dies erleichtert wesentlich die Handhabung des Werkzeugs nach Gebrauch und ermöglicht, die Maschineneinstellungen für nachfolgende Reinigungs- und Wartungsarbeiten automatisch und bedarfsgerecht vorzunehmen.

Nachfolgend wird die Erfindung anhand eines Ausführungsbeispiels erläutert, das in der Zeichnung dargestellt ist.

In der Zeichnung zeigen:
- Fig. 1: ein als Messer ausgebildetes Handwerkzeug nach der Erfindung,
- Fig. 2: als Detail aus Fig. 1 eine vergrößerte Darstellung einer Öffnung mit dem RFIF-Chip und der Koppelschleife und
- Fig. 3: eine schematische Darstellung einer Anlage zur Ein- und Ausgabe sowie zur Reinigung und Wartung von Werkzeugen.

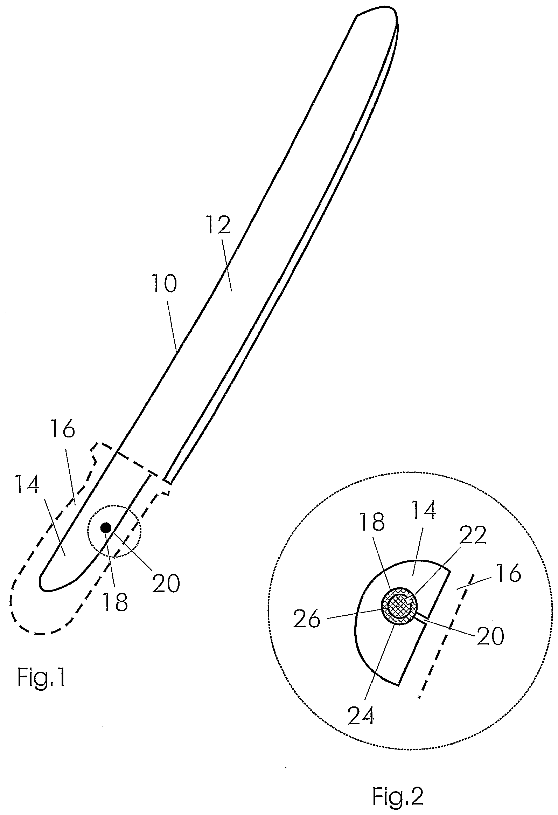

Fig. 1 zeigt ein Messer 10 nach der Erfindung, bestehend aus einer metallischen Klinge 12, einem metallischen Erl 14 mit einer Öffnung 18 und einem Kunststoffgriff 16. Letzterer ist nur gestrichelt angedeutet, um die Sicht auf die Öffnung 18 zu ermöglichen. Die Öffnung 18 weist einen nach außen führenden Schlitz 20 auf und in der Öffnung ist ein RFID-Chip mit einer Koppelschleife (Detail Fig. 2) angeordnet.

Die metallische Klinge 12 und das metallischen Erl 14 sind erfindungsgemäß Strahler einer asymmetrisch induktiv gespeisten elektrischen Antenne. Das die Öffnung 18 unmittelbar umgebende Metall bildet eine Koppelwindung für die Strahler und ist gleichzeitig in die Strahler integriert. Der von der Öffnung 18 nach außen geführte Schlitz 20 ist nötig, damit eine Koppelwindung und keine Kurzschlusswindung entsteht.

Fig. 2 zeigt als Detail aus Fig. 1 eine vergrößerte Darstellung einer Öffnung 18 mit dem RFIF-Chip 22, der Koppelschleife 24 und dem Schlitz 20. Der RFID-Chip 22 mit der Koppelschleife 24 ist in eine Vergussmasse 26 eingebettet und stellt ein vorgefertigtes Bauteil dar, dessen äußere Abmessungen dem Durchmeser und der Dicke des Erl 14 entsprechen. Dieses Bauteil wird vor Anspritzen des Kunststoffgriffes 16 in die Öffnung 18 eingesetzt und verklemmt sich dort.

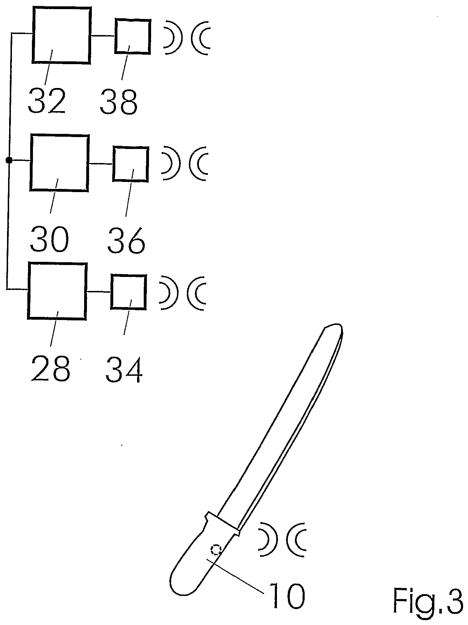

Fig. 3 zeigt eine schematische Darstellung einer Anlage zur Ein- und Ausgabe sowie zur Reinigung und Wartung von Werkzeugen.,

Die Anlage umfasst eine Ein- und Ausgabestation 28 sowie eine Reinigungs- 30 und Wartungsstation 32 für Werkzeuge 10, jeweils ausgestattet mit einem Lesegerät 34, 36, 38.

Ein Nutzer erhält ein Werkzeug 10, z. B. ein Messer, an einer Ein- und Ausgabestation 28. Dort werden Identdaten des Werkzeugs 10 sowie eventuell des Nutzers erfasst. Der Nutzer empfängt nach einer maximalen Nutzungsdauer des Werkzeugs 10 ein Signal, dass ihm das das Ende der Nutzungsdauer mitteilt und ihn veranlasst, das verbrauchte Werkzeug an der einer Ein- und Ausgabestation 28 zurückzugeben.

Je nach Art des Werkzeugs 10 wird anschließend eine Reinigung und/oder Wartung in einer Reinigungs- 30, oder Wartungsstation 32 durchgeführt, ehe das Werkzeug 10, sofern möglich, in den Nutzungskreislauf zurückgeführt wird.

Beim Erfassen des Werkzeugs 10 an der Ein- und Ausgabestation 28 sowie der Reinigungs- 30, oder Wartungsstation 32 werden Angaben über Art und Typs des Handwerkzeugs 10 sowie Gebrauchsdauer in einem Stationsspeicher und im RFID-Chip 22 codiert oder uncodiert durch Beschreiben gespeichert. Weiterhin werden Einsatzzeiten sowie Bearbeitungs- und Wartungsvorgänge, wie Reinigen, Schärfen erfasst und gespeichert. Bei Überschreiten von zulässigen Grenzwerten der Einsatzzeiten sowie der Anzahl der zulässigen Bearbeitungs- und Wartungsvorgänge kann der Nutzer gewarnt werden oder das Werkzeug aus dem Nutzungskreislauf entfernt werden.

Falls Bearbeitungs- und Wartungsvorgänge sinnvoll sind und einen erneuten Einsatz des Werkzeugs versprechen, kann über eine Identifizierung von Art und Typs des Handwerkzeugs 10 ein Reinigungs- und/oder Schärfwerkzeug in den Bearbeitungsparametern voreingestellt werden.

## Patentansprüche

1. Handwerkzeug, bestehend aus wenigstens einem metallischen Teil, wobei der metallische Teil (14) eine Öffnung (18) aufweist, in der ein RFID-Chip (22) angeordnet ist, **dadurch gekennzeichnet, dass** der metallische Teil (14) eine Antenne ist, mit der der RFID-Chip (22) über eine Koppelschleife (24) induktiv gekoppelt ist, wobei die Öffnung (18) im metallischen Teil (14) einen nach außen geführten Schlitz (20) aufweist und in der Öffnung (18) zusätzlich die Koppelschleife (24) angeordnet ist, wodurch der metallische Teil (14) des Handwerkzeugs selbst Antenne ist.

2. Handwerkzeug nach Anspruch 1, **dadurch gekennzeichnet, dass** der RFID-Chip (22) mit der Koppelschleife (24) in eine Vergussmasse (26) eingebettet ist und in die Öffnung (18) eingeklemmt ist.

3. Handwerkzeug nach Anspruch 2, **dadurch gekennzeichnet, dass** ein Kunststoffgriff (16) den metallischen Teil (14) mit der Öffnung (18) und den in der Öffnung (18) angeordneten RFID-Chip (22) mit der Koppelschleife (24) umschließt.

4. Handwerkzeug nach einem der Ansprüche 1 bis 3, welches als Messer aus einer metallischen Klinge (12) und einem metallischen Erl (14) ausgebildet ist, **dadurch gekennzeichnet, dass** die Öffnung (18) mit dem nach außen geführten Schlitz (20) im Erl (14) angeordnet ist.

5. Handwerkzeug nach Anspruch 4, **dadurch gekennzeichnet, dass** der Erl (14) mit der Öffnung (18) mit dem nach außen geführten Schlitz (20) sowie der in der Öffnung (18) angeordnete RFID-Chip (22) mit der Koppelschleife (24) von einem Kunststoffgriff (16) umschlossen ist.

## Claims

1. Hand tool, consisting of at least one metallic part, wherein the metallic part (14) has an opening (18) in which there is arranged an RFID chip (22), **characterized in that** the metallic part (14) is an antenna to which the RFID chip (22) is inductively coupled via a coupling loop (24), wherein the opening (18) in the metallic part (14) has an outward-oriented slit (20) and in addition the coupling loop (24) is arranged in the opening (18), whereby the metallic part (14) of the hand tool is itself an antenna.

2. Hand tool according to Claim 1, **characterized in that** the RFID chip (22), together with the coupling loop (24), is embedded in a sealing compound (26) and is wedged into the opening (18).

3. Hand tool according to Claim 2, **characterized in that** a plastic grip (16) encloses the metallic part (14) with the opening (18) and the RFID chip (22), with the coupling loop (24), arranged in the opening (18).

4. Hand tool according to one of Claims 1 to 3, which is in the form of a knife consisting of a metallic blade (12) and a metallic tang (14), **characterized in that** the opening (18) with the outward-oriented slit (20) is arranged in the tang (14).

5. Hand tool according to Claim 4, **characterized in that** the tang (14) with the opening (18) having the outward-oriented slit (20) and the RFID chip (22), with the coupling loop (24), arranged in the opening (18) is enclosed by a plastic grip (16).

## Revendications

1. Outil à main constitué d'au moins une pièce métallique, dans lequel la pièce métallique (14) présente une ouverture (18) dans laquelle est disposée une puce RFID (12), **caractérisé en ce que** la pièce métallique (14) est une antenne à laquelle la puce RFID (22) est couplée par induction par l'intermédiaire d'une boucle de couplage (24), dans lequel l'ouverture (18) ménagée dans la pièce métallique (14) présente une fente (20) tournée vers l'extérieur et la boucle de couplage (24) est en outre disposée dans l'ouverture (18), d'où il résulte que la pièce métallique (14) de l'outil à main est elle-même une antenne.

2. Outil à main selon la revendication 1, **caractérisé en ce que** la puce RFID (22), avec la boucle de couplage (24), est intégrée à une masse d'enrobage (26) et est pincée dans l'ouverture (18).

3. Outil à main selon la revendication 2, **caractérisé en ce qu'**une poignée en matière plastique (16) enveloppe la pièce métallique (14), avec l'ouverture (18), et la puce RFID (22) disposée dans l'ouverture (18), avec la boucle de couplage (24).

4. Outil à main selon l'une des revendications 1 à 3, réalisé sous la forme d'un couteau constitué d'une lame métallique (12) et d'un manche métallique (14), **caractérisé en ce que** l'ouverture (18), avec la fente (20) tournée vers l'extérieur, est disposée dans le manche (14).

5. Outil à main selon la revendication 4, **caractérisé en ce que** le manche (14), avec l'ouverture (18) comportant la fente (20) tournée vers l'extérieur ainsi que la puce RFID (22) disposée dans l'ouverture (18), avec la boucle de couplage (24), est enveloppé par une poignée en matière plastique (16).
